# FASCICULE DE BREVET EUROPEEN

(11) **EP 0 580 520 B1**
(45) Date de publication et mention de la délivrance du brevet: **19.04.1995**
(21) Numéro de dépôt: 93401920.9
(22) Date de dépôt: 23.07.1993
(51) Int. Cl.: G01F 15/06

(54) **Procédé et dispositif d'adaptation de systèmes électroniques à des compteurs d'eau**
Verfahren und Vorrichtung zum Anpassen von elektronischen Systemen an Wasserzähler
Method and device for adapting electronic systems to water meters

(30) Priorité: 24.07.1992 FR 9209198
(43) Date de publication de la demande: 26.01.1994
(73) Titulaire: SAPPEL, 68304 Saint-Louis (FR)
(72) Inventeur: Walch, Frédéric, CABINET BALLOT-SCHMIT, F-75116 Paris (FR); Baumann, Michel, CABINET BALLOT-SCHMIT, F-75116 Paris (FR)
(74) Mandataire: Ballot, Paul Denis Jacques

(56) Documents cités:
- DE-U- 9 005 404
- GB-A- 1 391 989
- US-A- 3 054 095

## Description

La présente invention a trait au domaine des compteurs d'eau et concerne tout spécialement un procédé, ainsi que le dispositif correspondant destiné à équiper des compteurs d'eau conventionnels afin d'effectuer, par des moyens électroniques des séries de mesure à distance.

On a tenté depuis un certain nombre d'années de perfectionner les compteurs d'eau classiques en leur incorporant des dispositifs électroniques aptes à remplir diverses fonctions telles que par exemple : le relevé électronique à distance, l'analyse de débits, le calcul d'énergie thermique...

On sait que, parmi les compteurs d'eau conventionnels à cadran de lecture, un certain nombre sont maintenant équipés d'une aiguille associée à un aimant mobile dont chaque tour de révolution correspond à un litre de débit. De tels compteurs sont connus du document Schlumberger "Allness Klasse C-Einstrahlwasserzähler" PR 1400-M-I-54321, Octobre 1991.

Il est connu par ailleurs d'effectuer des relevés électroniques des compteurs à distance afin d'obvier à tous les inconvénients connus et fastidieux des contrôles classiques et de centraliser les données à un poste général. On se référera notamment aux documents FR-A-2151853 et US-A-3054095 qui décrivent des moyens de lecture électroniques avec centralisation des données vers un poste général situé à distance d'un compteur.

Dans le but de pouvoir assurer de tels relevés automatiques, on a déjà préconisé de pratiquer dans les compteurs à aimants des puits ou fentes aptes à recevoir des sondes munies de capteurs, qui permettent de compter la rotation de l'aimant. Toutefois le perçage des puits ou fentes constitue une opération difficile et coûteuse. En outre, les éléments ajoutés doivent être immobilisés par des moyens tels que vis ou analogues.

Par ailleurs, on connaît, du document FR-A-2 647 206, des compteurs à gaz comprenant un aimant permanent lié angulairement à un organe rotatif placé à distance d'un capteur magnétique propre à engendrer une impulsion électrique pour chaque révolution de l'aimant.

Il a maintenant été trouvé un système, visant le même but de relevé et transmission d'impulsions électriques pour adaptation à un compteur conventionnel équipé d'aiguille à aimant mobile, mais dont la mise en place sur le compteur existant est automatique, ne nécessitant pas d'intervention délicate sur le lieu d'implantation du compteur, n'exigeant pas de pièces de fixation et/ou de réglage et offrant un certain degré d'inviolabilité nécessaire pour un appareil de mesure.

Conformément à la caractéristique principale du procédé selon l'invention destiné à l'adaptation sur compteur d'eau à couvercle maintenu par une charnière comportant un cadran de lecture avec aiguille et aimant, on enlève la goupille de maintien du couvercle dans la charnière, puis on encliquète à force sur la bordure supérieure du cadran une pièce annulaire comportant un capteur sensible à la rotation de l'aimant et un câble de transmission des signaux électriques à un moyen de mesure de ces signaux, le couvercle à charnière étant ensuite remis en place sur ladite pièce annulaire.

Selon un perfectionnement au procédé, après mise en place de ladite pièce annulaire, le couvercle est remplacé par un boîtier électronique fixé sur la charnière et muni d'un écran de lecture, le boîtier étant relié électriquement à la pièce annulaire par ledit câble et pouvant contenir toutes données informatiques nécessaires.

Conformément à une variante d'exécution particulièrement intéressante lorsque le compteur est disposé en un milieu très humide, le boîtier électronique peut être placé à distance du compteur par exemple fixé à un mur, où moyen équivalent.

L'invention a également pour objet un dispositif de mise en oeuvre du procédé - et variantes - énoncé ci-avant.
Afin de faciliter la compréhension on décrira maintenant ci-dessous, un exemple préférentiel, quoique non limitatif, de réalisation illustré par les dessins schématiques annexés qui représentent :
- Fig 1 :: Une vue générale simplifiée d'un compteur à aiguille et aimant de type connu.
- Fig 2 :: La représentation d'un couvercle à charnière pour un compteur de la Fig 1.
- Fig 3 :: Une pièce annulaire selon l'invention adaptable directement sur le compteur.
- Fig 4 :: Une vue schématique d'un boîtier électronique apte à se substituer au couvercle du compteur.
- Fig 5 :: Un moyen illustratif de fixation de boîtier électronique à distance du compteur.

D'une façon générale, les compteurs d'eau convenant à l'adaptation du dispositif conformément à la présente invention comprennent un corps (1), dont le cadran de lecture (2) comporte une aiguille (3) généralement associée à un aimant mobile compte-tours (4).
Le cadran de lecture est protégé par un couvercle (5) s'ouvrant grâce à un dispositif du type pièce charnière. Cette dernière est composée de façon connu d'un élément (6) solidaire du corps (1) et d'une paire complémentaire de deux éléments (6′) et (6˝) solidaire du couvercle (5), chaque élément (6), (6′) et (6˝) comportant une perforation dans laquelle est introduite une goupille (7) assurant la solidarisation.

Conformément à l'invention afin d'adapter un système émetteur d'impulsions électriques aptes à être transmises à distance, on retire la goupille (7) de la pièce charnière, et on ôte le couvercle, que l'on remplace par une pièce annulaire (8), munie d'un capteur (9), sensible à la rotation de l'aimant, et comportant un mentonnet (10) à intérieur creux et également perforé, apte à s'ajuster sur l'élément (6) du corps du compteur et permettant ainsi à ladite pièce annulaire de venir s'encliqueter à force sur la bordure supérieure du cadran (2).

Cet encliquetage à force est avantageusement effectué par un assemblage d'au moins une lame en forme de crochet, fixée sur le bord de la pièce annulaire 8 et venant se verrouiller définitivement dans une encoche pratiquée à la périphérie supérieure du corps (1) du compteur.

Le capteur (9) étant sensible à la rotation de l'aimant délivre un signal électrique à chaque tour de celui-ci, qui sera transmis par un câble (11) à un moyen de mesure.

Le couvercle (5), après ajustement de la pièce annulaire peut être remis en place, au moyen de la même goupille (7) assurant la solidarisation entre l'élément (6), le mentonnet (10) et les deux éléments (6′) et (6˝).

Selon un mode de réalisation avantageux de la présente invention, il est intéressant d'utiliser comme moyen de mesure des signaux électriques transmis par le capteur décrit ci-dessus, une électronique de traitement.

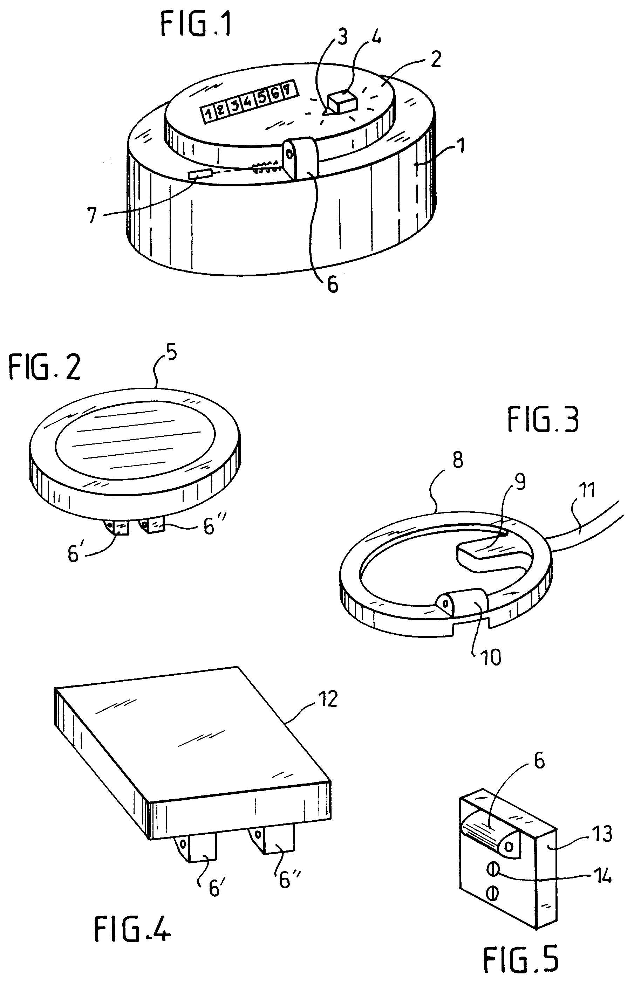

Cette électronique est en général placée dans un boîtier (12), relié électriquement à ladite pièce annulaire par l'intermédiaire du câble (11), et comportant comme le couvercle (5) une paire de deux éléments complémentaires (6′) et (6˝) comme on peut le voir sur la Figure 4.

Le boîtier est alors substitué au couvercle et rendu solidaire de l'ensemble constitué par le corps du compteur et la pièce annulaire au moyen de la même goupille (7).

Naturellement, le boîtier électronique est apte à contenir toutes les données informatiques d'identification. Il peut être muni d'un écran de lecture de type à cristaux liquides, facilitant le relevé du compteur, dans le cas par exemple d'un comptage d'énergie thermique. Il est en revanche aveugle, dans le cas d'un traitement d'informations volumétriques ou débitmétriques destinées au télérelevé.

Conformément à la variante de réalisation illustrée par la Figure 5, dans le cas où le compteur d'eau se trouve dans un environnement très humide, ou dans un point difficile d'accès, le boîtier (12) peut être avantageusement placé à distance du compteur, dans une pièce voisine moins humide par exemple, et ceci au moyen de la pièce (13) se présentant sous la forme d'un agraphe comportant deux trous de fixation (14) et un élément (6) analogue à l'élément de la pièce charnière du corps du compteur.
L'agraphe peut être fixée à un mur et le boîtier est rendu solidaire de celle-ci en verrouillant au moyen de la goupille 7.

## Revendications

1. Procédé pour adapter un système émetteur d'impulsions électriques aptes à être transmises à distance, sur un compteur d'eau conventionnel à couvercle avec charnière dont le cadran de lecture (2) comporte une aiguille (3) généralement associée à un aimant mobile compte-tours (4), caractérisé en ce que, après avoir ôté la goupille (7) de maintien du couvercle (5) dans la charnière (6, 6′, 6˝), on encliquète à force sur la bordure supérieure du cadran (2) une pièce annulaire (8) comportant un capteur (9) sensible à la rotation de l'aimant (4) et un câble (11) de transmission des signaux électriques à un moyen de mesure de ces signaux (12), le couvercle (5) à charnière étant ensuite remis en place sur ladite pièce annulaire (8).

2. Procédé selon la revendication 1, caractérisé en ce que, après mise en place de ladite pièce annulaire (8), le couvercle (5) est remplacé par un boîtier électronique (12) fixé sur la charnière (6, 6′, 6˝) et muni d'un écran de lecture, le boîtier (12) étant relié électriquement à la pièce annulaire (8) par ledit câble (11) et pouvant contenir toutes données informatiques nécessaires.

3. Procédé selon la revendication 1, caractérisé en ce que ledit câble (11) de transmission des signaux électriques est relié à un boîtier électronique (12) pouvant contenir toutes données informatiques nécessaires et disposé, hors humidité, à distance du compteur.

4. Système modulaire émetteur d'impulsions électriques pouvant être transmises à distance et qui est adaptable à un compteur d'eau conventionnel à couvercle (5) avec charnière (6, 6′, 6˝) dont le cadran de lecture (2) comporte une aiguille (3) généralement associée à un aimant mobile compte-tours (4), caractrisé en ce qu'il consiste en une pièce annulaire (8) encliquetable à force sur la bordure supérieure dudit cadran de lecture et comportant un capteur (9) sensible à la rotation de l'aimant ainsi qu'un câble (11) de transmission de signaux électriques à un moyen de mesure de ces signaux, ladite pièce annulaire étant munie d'un élément de charnière (10) et recouverte par ledit couvercle (5).

5. Système modulaire selon la revendication 4, caractérisé en ce qu'il comporte en outre un boîtier électronique (12) de données informatiques relié électriquement à ladite pièce annulaire par ledit câble électrique (11) et se substituant audit couvercle.

6. Système modulaire selon la revendication 4, caractérisé en ce qu'il comporte en outre un boîtier électronique (12) de données informatiques relié électriquement à ladite pièce annulaire par ledit câble électrique (11) et disposé, hors humidité, à distance du compteur sur un support (13) muni d'élément de charnière (6).

## Patentansprüche

1. Verfahren zur Anpassung eines fernübertragbare elektrische Impulse sendenden Systems an einen herkömmlichen Wasserzähler mit Deckel mit Scharnier, dessen Ablese-Skalenscheibe (2) einen Zeiger (3) besitzt, der im allgemeinen einem Drehzahlmeßmagnet (4) zugeordnet ist, dadurch gekennzeichnet, daß man nach Entfernung des den Deckel (5) im Scharnier (6, 6′,6˝) haltenden Stifts (7) auf den oberen Rand der Skalenscheibe (2) mit Kraft ein ringförmiges Teil (8) einrastet, das einen für die Drehung des Magnets (4) empfindlichen Fühler (9) und ein Kabel (11) zur Übertragung der elektrischen Signale auf eine Einrichtung (12) zum Messen dieser Signale besitzt, wobei der Scharnierdeckel (5) anschließend wieder auf diesem ringförmigen Teil (8) montiert wird.

2. Verfahren nach Anspruch 1, dadurch gekennzeichnet, daß nach der Anbringung des ringförmigen Teils (8) der Deckel (5) durch einen elektronischen Kasten (12) ersetzt wird, der an dem Scharnier (6, 6′, 6˝) befestigt ist und mit einer Ablese-Skalenscheibe versehen ist, wobei der Kasten (12) mit dem ringförmigen Teil (8) durch dieses Kabel (11) elektrisch verbunden ist und alle erforderlichen Informatikdaten enthalten kann.

3. Verfahren nach Anspruch 1, dadurch gekennzeichnet, daß dieses Kabel (11) zur Übertragung der elektrischen Signale mit einem elektronischen Gehäuse (12) verbunden ist, das alle erforderlichen Informatikdaten enthalten kann und außerhalb des feuchten Bereichs in einem Abstand vom Zähler angeordnet ist.

4. Modulförmiges System zum Senden von fernübertragbaren elektrischen Impulsen, das an einen herkömmlichen Wasserzähler mit Deckel (5) mit Scharnier (6, 6′, 6˝) anpaßbar ist, dessen Ablese-Skalenscheibe (2) einen Zeiger (3) besitzt, der im allgemeinen einem beweglichen Drehzahlmeßmagnet (4) zugeordnet ist, dadurch gekennzeichnet, daß es aus einem ringförmigen Teil (8) besteht, das auf dem oberen Rand dieser Ablese-Skalenscheibe mit Kraft eingerastet werden kann und einen für die Drehung des Magnets empfindlichen Fühler (9) sowie ein Kabel (11) zur Übertragung von elektrischen Signalen auf eine Einrichtung zum Messen dieser Signale besitzt, wobei dieses ringförmige Teil mit Scharnierelementen (10) versehen ist und durch diesen Deckel (5) abgedeckt ist.

5. Modulförmiges System nach Anspruch 4, dadurch gekennzeichnet, daß es außerdem einen elektronischen Informatikdaten-Kasten (12) besitzt, der mit diesem ringförmigen Teil durch dieses elektrische Kabel (11) elektrisch verbunden ist und den Deckel ersetzt.

6. Modulförmiges System nach Anspruch 4, dadurch gekennzeichnet, daß es außerdem einen elektronischen Informatikdaten-Kasten (12) besitzt, der mit diesem ringförmigen Teil durch dieses elektrische Kabel (11) elektrisch verbunden ist und außerhalb des feuchten Bereichs in einem Abstand vom Zähler auf einem mit Scharnierelementen (6) versehenen Halter (13) angeordnet ist.

## Claims

1. Method for fitting a system for transmitting electric pulses adapted to be transmitted remotely onto a conventional water meter having a lid with hinge the reading dial (2) of which comprises a needle (3) generally associated with a movable revolution counter magnet (4), characterised in that, after the pin (7) for maintaining the lid (5) has been removed from the hinge (6, 6′, 6˝), an annular piece (8) comprising a sensor (9) sensitive to the rotation of the magnet (4) and a cable (11) for transmitting the electric signals to a means for measuring these signals (12), is forcibly snapped home on the upper rim of the dial (2), the lid (5) with hinge being then put back into place on said annular piece (8).

2. Method according to Claim 1, characterised in that, after said annular piece (8) has been fitted, the lid (5) is replaced by an electronic unit (12) fixed onto the hinge (6, 6′, 6˝) and provided with a read-out screen, the unit (12) being connected electrically to the annular piece (8) by said cable (11) and being capable of containing all necessary computer data.

3. Method according to Claim 1, characterised in that said cable (11) for transmitting the electric signals is connected to an electronic unit (12) capable of containing all necessary computer data and disposed, away from damp, remotely from the meter.

4. Modular system for emitting electric pulses cable of being transmitted remotely and which is adaptable to a conventional water meter having a lid (5) with hinge (6, 6′, 6˝) the reading dial (2) of which comprises a needle (3) generally associated with a movable revolution-counter magnet (4), characterised in that it consists of an annular piece (8) capable of being snapped forcibly home onto the upper rim of said reading dial and comprising a sensor (9) sensitive to the rotation of the magnet as also a cable (11) for transmitting electric signals to a means for measuring these signals, said annular piece being provided with a hinge component (10) and covered by said lid (5).

5. Modular system according to Claim 4, characterised in that it further comprises an electronic unit (12) for computer data connected electrically to said annular piece by said electric cable (11) and substituting itself for said lid.

6. Modular system according to Claim 4, characterised in that it further comprises an electronic unit (12) for computer data connected electrically to said annular piece by said electric cable (11) and disposed, away from damp, remotely from the meter on a support (13) provided with a hinge component (6).
